# EUROPEAN PATENT APPLICATION

(11) **EP 4 838 044 A1**
(43) Date of publication of application: **11.11.2026**
(21) Application number: 24914862.8
(22) Date of filing: 29.08.2024
(51) Int. Cl.: E21D 9/06, B62D 13/00

(54) **REAR TRAILER, STEERING METHOD FOR REAR TRAILER, AND SHIELD MACHINE**

(30) Priority: 05.01.2024 CN 202410020914; 05.01.2024 CN 202410020891
(71) Applicant: China Railway Construction Heavy Industry Corporation Limited, Changsha, Hunan 410199 (CN)
(72) Inventor: DENG, Zhiqiang, Changsha, Hunan 410199 (CN); WANG, Bin, Changsha, Hunan 410199 (CN); LI, Pei, Changsha, Hunan 410199 (CN); LIU, Xing, Changsha, Hunan 410199 (CN); WANG, Jinhua, Changsha, Hunan 410199 (CN); CHEN, Yanghui, Changsha, Hunan 410199 (CN); XU, Yang, Changsha, Hunan 410199 (CN); DING, Yicheng, Changsha, Hunan 410199 (CN); RAN, Fei, Changsha, Hunan 410199 (CN); LI, Feng, Changsha, Hunan 410199 (CN); CAI, Jie, Changsha, Hunan 410199 (CN); ZHONG, Leihui, Changsha, Hunan 410199 (CN); HUANG, Wentao, Changsha, Hunan 410199 (CN); XU, Fuyu, Changsha, Hunan 410199 (CN); CHEN, Cuiwu, Changsha, Hunan 410199 (CN); WANG, Kai, Changsha, Hunan 410199 (CN); DENG, Zhixun, Changsha, Hunan 410199 (CN); ZHOU, Shuaihua, Changsha, Hunan 410199 (CN)
(74) Representative: Studio Torta S.p.A.
(86) International application number: PCT/CN2024/115641
(87) International publication number: WO 2025/145640

(57) **Abstract**

A backup trailer, a method of steering a backup trailer and a shield machine are provided, which relate to a field of tunnel construction technology, so as to solve a problem of deviation of the backup trailer in the related art. The backup trailer includes a trailer, a rubber-coated wheel traveling mechanism, a main controller, and a sub-controller. The sub-controller is configured to acquire an inclination angle value of the trailer when the trailer is inclined, and the sub-controller is further configured to compare the inclination angle value of the trailer with the actual deviation value of the trailer, and adjust the inclination angle value of the trailer to be less than or equal to the target correction value. In the present disclosure, the backup trailer may be corrected in real time, thereby avoiding the problem of the deviation of the backup trailer, and ensuring that the backup trailer travels along a preset route. At the same time, the device of the present disclosure is applicable to direction adjustment of backup trailers in different types of tunnels.

## Description

### CROSS REFERENCE TO RELATED APPLICATION(S)

This application claims priority to Chinese Patent Application No. 202410020891.0, entitled "Backup Trailer, Steering Method Thereof, and Shield Machine" and filed with the China National Intellectual Property Administration on January 05, 2024, the entire content of which is incorporated herein by reference.

This application claims priority to Chinese Patent Application No. 202410020914.8, entitled "Backup Trailer, Steering Method Thereof, and Shield Machine" and filed with the China National Intellectual Property Administration on January 05, 2024, the entire content of which is incorporated herein by reference.

### TECHNICAL FIELD

The present disclosure relates to a field of tunnel construction technology, and in particular to a backup trailer, a method of steering a backup trailer, and a shield machine.

### BACKGROUND

With economic development and accelerated urbanization, shield machines are required for the excavation of tunnels for urban subways, water conservancy and hydropower projects, highways, railways and the like, and shield machines have become increasingly prevalent due to their advantages such as safety and high efficiency.

A shield machine structurally includes a cutter head, a shield body, a screw conveyor, a belt conveyor, a backup trailer, and the like. During construction of the shield machine, the backup trailer is supported and travels on a straight wheel pair at the beginning. After entering a tunnel, the straight wheel pair needs to be replaced with an inclined wheel pair, which travels along an inner wall surface of erected segments. During traveling in the tunnel, due to environmental factors such as trailer pulling force, overall eccentric load on the trailer, flatness of a segment inner ring, and sandy soil, the backup trailer is prone to tilt to one side, which may slow down a traveling speed of the backup trailer and prevent the backup trailer from operating stably.

### SUMMARY

Embodiments of the present disclosure provide a backup trailer, a method of steering a backup trailer, and a shield machine, which may correct the backup trailer in real time, thereby avoiding a problem of deviation of the backup trailer, and ensuring that the backup trailer travels along a preset path. At the same time, the device of the present disclosure is applicable to direction adjustment of backup trailers in different types of tunnels.

In order to achieve the above-mentioned objectives, a first aspect of embodiments of the present disclosure provides a backup trailer, including a trailer, a rubber-coated wheel traveling mechanism, a main controller, and a sub-controller, where the rubber-coated wheel traveling mechanism is connected to a bottom of the trailer, the rubber-coated wheel traveling mechanism is driven to rotate when the trailer moves in an inclined manner, and the main controller is electrically connected to the sub-controller; the main controller is configured to determine an actual deviation value of the trailer during traveling and set a target correction value of the trailer, the main controller is further configured to send the actual deviation value and the target correction value to the sub-controller, and the target correction value is less than the actual deviation value; and the sub-controller is configured to acquire an inclination angle value of the trailer when the trailer is inclined, and the sub-controller is further configured to compare the inclination angle value of the trailer with the actual deviation value of the trailer, and adjust the inclination angle value of the trailer to be less than or equal to the target correction value.

In a possible implementation, the trailer is provided with an inclination sensor, and the sub-controller is electrically connected to the inclination sensor; the inclination sensor is configured to acquire an inclination sensor signal of the trailer when the trailer is inclined, and the sub-controller is configured to acquire the inclination sensor signal and acquire the inclination angle value of the trailer after processing the inclination sensor signal; and the sub-controller is further configured to calculate a deviation amount of the rubber-coated wheel according to the inclination angle value of the trailer.

In a possible implementation, the rubber-coated wheel traveling mechanism includes a rubber-coated wheel pair, the rubber-coated wheel pair includes two rubber-coated wheels, a steering cylinder is connected between the rubber-coated wheel and the trailer, and the steering cylinder is configured to perform a steering operation on the rubber-coated wheel; and the sub-controller is configured to acquire a stroke of the steering cylinder, and the sub-controller is further configured to control extension and retraction of the steering cylinder, so that an extension/retraction amount of the steering cylinder equals the deviation amount of the rubber-coated wheel, thereby achieving steering of the rubber-coated wheel.

In a possible implementation, the steering cylinder is provided with a stroke sensor, the stroke sensor is electrically connected to the sub-controller, and the sub-controller is configured to acquire the stroke of the steering cylinder through the stroke sensor; and/or the steering cylinder is provide with an electro-hydraulic proportional valve, the electro-hydraulic proportional valve is electrically connected to the sub-controller, and the sub-controller is configured to control the extension and retraction of the steering cylinder through an electrical signal of the electro-hydraulic proportional valve.

In a possible implementation, the backup trailer further includes a guide device, where the guide device is electrically connected to the sub-controller, and the guide device is configured to acquire a travel mileage of the trailer and send the travel mileage of the trailer to the sub-controller; and/or the backup trailer further includes a touch control device, the touch control device is electrically connected to the main controller, and the main controller is configured to acquire an operation instruction from an on-site operator through the touch control device and send the operation instruction to the sub-controller.

In a possible implementation, the rubber-coated wheel traveling mechanism is provided with a reset cylinder and a displacement sensor, the sub-controller is electrically connected to the steering cylinder and the displacement sensor respectively, and the reset cylinder is connected to the displacement sensor; the displacement sensor is configured to detect a real-time rotational displacement value of the rubber-coated wheel traveling mechanism when the rubber-coated wheel traveling mechanism rotates, and send the real-time rotational displacement value to the sub-controller; the sub-controller is configured to receive the real-time rotational displacement value and send a steering signal to the reset cylinder, the reset cylinder is configured to receive the steering signal and perform a steering operation on the rubber-coated wheel traveling mechanism, the rubber-coated wheel traveling mechanism rotates according to the steering operation and reversely drives the trailer to move, and the inclination sensor is configured to continue to detect the inclination angle value of the trailer; and when the inclination angle value of the trailer is greater than the actual deviation value of the trailer, the above steps are repeated, and when the inclination angle value of the trailer is less than or equal to the target correction value of the trailer, the sub-controller is configured to send a reset signal to the reset cylinder.

In a possible implementation, the displacement sensor is further configured to continue to send the real-time rotational displacement value of the rubber-coated wheel traveling mechanism to the sub-controller when the reset cylinder is not completely reset, and the sub-controller is configured to receive the real-time rotational displacement value and continue to send the reset signal to the reset cylinder until the reset cylinder is completely reset.

In a possible implementation, the backup trailer further includes a hydraulic pump station, where the hydraulic pump station is disposed on the trailer, the hydraulic pump station is connected to the reset cylinder, and the hydraulic pump station is configured to provide power to the reset cylinder.

In a possible implementation, the trailer includes a trailer frame and a column disposed on the trailer frame, the inclination sensor is disposed on the column, and the rubber-coated wheel traveling mechanism is connected below the trailer frame.

In a possible implementation, the rubber-coated wheel traveling mechanism includes a connecting rod and a box body; the box body is connected below the trailer frame, the rubber-coated wheel pair is disposed on a side of the box body away from the trailer frame, and the connecting rod is connected between the two rubber-coated wheels; and the rubber-coated wheel is driven to rotate when the trailer is inclined.

In a possible implementation, two columns are provided and are oppositely disposed on the trailer frame, and two inclination sensors are provided and are correspondingly disposed on the two column; and two rubber-coated wheel traveling mechanisms are provided and are correspondingly disposed below the trailer frame.

In a possible implementation, the backup trailer further includes a connecting base, where the trailer and the rubber-coated wheel traveling mechanism are connected through the connecting base.

In a possible implementation, a plurality of rubber-coated wheels are provided and are connected to different positions on the bottom of the trailer; a plurality of inclination sensors are provided and are disposed at least at a front end and a rear end of the trailer; a plurality of steering cylinders are provided and are connected in one-to-one correspondence between the plurality of rubber-coated wheels and the trailer; and a plurality of stroke sensors are provided and are disposed in one-to-one correspondence on the plurality of steering cylinders.

A second aspect of embodiments of the present disclosure further provides a method of steering a backup trailer, for use in the backup trailer, including: acquiring an inclination sensor signal and acquiring an inclination angle value of a trailer after processing the inclination sensor signal; calculating a deviation amount of a rubber-coated wheel; acquiring a stroke of a steering cylinder; acquiring a travel mileage of the trailer; determining an actual deviation value of the trailer during traveling and setting a target correction value of the trailer; comparing the inclination angle value of the trailer with the actual deviation value of the trailer; when the inclination angle value of the trailer is greater than or equal to the actual deviation value of the trailer, recording a current stroke of the steering cylinder, and controlling the steering cylinder to extend or retract, and when a difference between the current stroke of the steering cylinder and a previous stroke of the steering cylinder is not less than the deviation amount of the rubber-coated wheel, recording a current travel mileage of the trailer, and setting a number N of correction rings to 0; when the inclination angle value of the trailer is less than the actual deviation value of the trailer, returning to the step of "comparing the inclination angle value of the trailer with the actual deviation value of the trailer"; continuing to move the trailer forward, and when a difference between the current travel mileage of the trailer and a previous travel mileage of the trailer is not less than a width of one full ring of segments formed by segment erection, recording the current stroke of the steering cylinder; and setting the number N of correction rings to N+1; when the inclination angle value of the trailer is less than the target correction value of the trailer, determining that correction is successful, controlling the steering cylinder to reset, and when the difference between the current stroke of the steering cylinder and the previous stroke of the steering cylinder is not less than the deviation amount of the rubber-coated wheel, returning to the step of "comparing the inclination angle value of the trailer with the actual deviation value of the trailer"; when the inclination angle value of the trailer is greater than the target correction value of the trailer and less than the actual deviation value of the trailer, returning to the step of "continuing to move the trailer forward"; and when the inclination angle value of the trailer is greater than the actual deviation value of the trailer, giving a prompt that an automatic steering fault has occurred and manual intervention for a steering signal is required, and automatically exiting a steering program.

In a possible implementation, the step of "acquiring an inclination sensor signal and acquiring an inclination angle value of a trailer after processing the inclination sensor signal" specifically includes: when the inclination sensor signal includes a plurality of consecutive signal values, obtaining a plurality of consecutive inclination angle values after processing the plurality of inclination sensor signals, and calculating an average value of the plurality of inclination angle values; and the step of "calculating a deviation amount of a rubber-coated wheel" specifically includes: setting an inner diameter of one full ring of segments formed by segment erection, and calculating the deviation amount of the rubber-coated wheel according to the inclination angle value of the trailer, where the deviation amount of the rubber-coated wheel is calculated by a formula: $L = 2 \times R \times sin \frac{θ}{2}$, where L is the deviation amount of the rubber-coated wheel, θ is the average value of the plurality of inclination angle values, and R is the inner diameter of one full ring of segments formed by segment erection.

In a possible implementation, the step of "when a difference between the current travel mileage of the trailer and a previous travel mileage of the trailer is not less than a width of one full ring of segments formed by segment erection" specifically includes: setting the width of one full ring of segments, where the travel mileage of the trailer during a correction process is calculated by a formula: S=N×W, where S is the travel mileage of the trailer during the correction process, N is a number of correction rings, and W is the width of one full ring of segments.

A third aspect of embodiments of the present disclosure further provides a method of steering a backup trailer, for use in the backup trailer, including: acquiring an inclination angle value of a trailer and sending an inclination angle value to a sub-controller; when a rubber-coated wheel traveling mechanism rotates, detecting a real-time rotational displacement value of the rubber-coated wheel traveling mechanism, and sending the real-time rotational displacement value to the sub-controller; receiving the real-time rotational displacement value and sending a steering signal to a reset cylinder; receiving the steering signal and performing a steering operation on the rubber-coated wheel traveling mechanism; rotating according to the steering operation and reversely driving the trailer to move; continuing to detect the inclination angle value of the trailer; and when the inclination angle value is greater than an actual deviation value, repeating the above steps, and when the inclination angle value is less than or equal to a target correction value, sending a reset signal to the reset cylinder.

In a possible implementation, the sending a reset signal to the reset cylinder specifically includes: when the reset cylinder is not completely reset, continuing to send the real-time rotational displacement value of the rubber-coated wheel traveling mechanism to the sub-controller; and receiving the real-time rotational displacement value, and continuing to send the reset signal to the reset cylinder until the reset cylinder is completely reset.

A fourth aspect of embodiments of the present disclosure provides a shield machine, including at least a cutter head, a shield body, and the backup trailer, where the cutter head is connected to the shield body, the cutter head is located at a tunneling end of the shield tunneling machine, and the backup trailer is disposed at a rear end of the shield body.

Embodiments of the present disclosure provide a backup trailer, a method of steering a backup trailer and a shield machine. The backup trailer includes a trailer, a rubber-coated wheel traveling mechanism, a main controller and a sub-controller. The sub-controller is further configured to compare the inclination angle value of the trailer with the actual deviation value of the trailer, and adjust the inclination angle value of the trailer to be less than or equal to the target correction value. In this way, the backup trailer may be corrected in real time, thereby avoiding the problem of deviation of the backup trailer, and ensuring that the backup trailer travels along a preset path. At the same time, the device of the present disclosure is applicable to direction adjustment of backup trailers in different types of tunnels.

The structure of the present disclosure and other application objectives and beneficial effects thereof will become more apparent and understandable from the description of preferred embodiments in combination with accompanying drawings.

### BRIEF DESCRIPTION OF THE DRAWINGS

In order to more clearly illustrate the technical solutions in embodiments of the present disclosure or the prior art, the accompanying drawings required for describing the embodiments or the prior art will be briefly introduced below. Obviously, the accompanying drawings described below are only some embodiments of the present disclosure, and those skilled in the art may obtain other accompanying drawings based on these accompanying drawings without any creative work.
FIG. 1 is a first schematic structural diagram of a backup trailer according to embodiments of the present disclosure;
FIG. 2 is a second schematic structural diagram of a backup trailer according to embodiments of the present disclosure;
FIG. 3 is a schematic diagram of a method of controlling a backup trailer according to embodiments of the present disclosure;
FIG. 4 is a schematic flowchart of a first method of steering a backup trailer according to embodiments of the present disclosure;
FIG. 5 is a third schematic structural diagram of a backup trailer according to embodiments of the present disclosure;
FIG. 6 is a cross-sectional view of a backup trailer according to embodiments of the present disclosure;
FIG. 7 is a schematic structural diagram of a backup trailer in a non-inclined state according to embodiments of the present disclosure;
FIG. 8 is a schematic structural diagram of a backup trailer in an inclined state according to embodiments of the present disclosure;
FIG. 9 is a schematic structural diagram of a trailer and an inclination sensor of a backup trailer according to embodiments of the present disclosure;
FIG. 10 is a schematic structural diagram of a reset cylinder and a displacement sensor of a backup trailer according to embodiments of the present disclosure;
FIG. 11 is a schematic flowchart of a second method of steering a backup trailer according to embodiments of the present disclosure.

### Description of Reference Numerals

100 - backup trailer;
110 - trailer;
111 - trailer frame;
112 - column;
120 - rubber-coated wheel traveling mechanism;
121 - connecting rod;
122 - box body;
123 - rubber-coated wheel pair;
1231 - rubber-coated wheel;
130 - inclination sensor;
140 - main controller;
150 - sub-controller;
160 - stroke sensor;
170 - electro-hydraulic proportional valve;
180 - steering cylinder;
190 - guide device;
200 - displacement sensor;
300 - reset cylinder;
400 - hydraulic pump station;
500 - connecting base;
600 - inner wall surface of erected segments.

### DETAILED DESCRIPTION OF EMBODIMENTS

The shield machine is a special engineering machine for tunnel excavation, which has functions such as excavating and cutting soil, transporting muck, assembling tunnel linings, and measuring, guiding and correcting deviations. Tunnel construction using a shield machine features a high degree of automation, labor saving and fast construction speed. The use of a shield machine for construction is more economically reasonable in the case of long tunnel alignments and large buried depths.

During construction of the shield machine, the backup trailer is supported and travels on a straight wheel pair at the beginning. After entering a tunnel, the straight wheel pair needs to be replaced with an inclined wheel pair, which travels along an inner wall surface of erectd segments. However, during traveling in the tunnel, due to environmental factors such as trailer pulling force, overall eccentric load on the trailer, flatness of a segment inner ring, and sandy soil, the backup trailer is prone to tilt to one side, which may slow down a traveling speed of the backup trailer and prevent the backup trailer from operating stably.

In view of the above-mentioned technical problems, embodiments of the present disclosure provide a backup trailer, a method of steering a backup trailer and a shield machine. The backup trailer includes a trailer, a rubber-coated wheel, a main controller and a sub-controller. The sub-controller is further configured to compare the inclination angle value of the trailer with the actual deviation value of the trailer, and adjust the inclination angle value of the trailer to be less than or equal to the target correction value. In this way, the backup trailer may be corrected in real time, thereby avoiding the problem of deviation of the backup trailer, and ensuring that the backup trailer travels along a preset path. At the same time, the device of the present disclosure is applicable to direction adjustment of backup trailers in different types of tunnels.

In order to make objectives, technical solutions and advantages of embodiments of the present disclosure clearer, the technical solutions in embodiments of the present disclosure will be described clearly and completely in combination with the accompanying drawings in embodiments of the present disclosure. Obviously, the described embodiments are some, but not all of embodiments of the present disclosure. Based on embodiments of the present disclosure, all other embodiments obtained by those skilled in the art without any creative work shall fall within the scope of protection of the present disclosure.

### Embodiment 1

Embodiments of the present disclosure provide a shield machine, which is mainly used in tunnels for construction on tunnel strata. The shield machine includes at least a cutter head and a shield body. Here, "includes at least" means that: the shield machine further includes, in addition to the cutter head and the shield body, other structures such as a mucking device, a screw conveyor, a belt conveyor, etc., which will not be elaborated in details in embodiments of the present disclosure.

The shield body includes a front shield, a middle shield, and a tail shield, where the middle shield is connected between the front shield and the tail shield. Specifically, the front shield is located on a side of the shield machine close to a tunneling end, and the tail shield is located on a side of the shield machine away from the tunneling end. The tunneling end, also referred to as an excavation end, is located at the foremost end of the shield machine. The cutter head is connected to the front shield and is located at the tunneling end of the shield machine, and the cutter head is used to excavate the tunnel strata.

The shield body is provided with a backup trailer 100 and a main machine. The main machine of the shield machine is used to excavate soil on a tunnel face at the forefront of the tunnel. The backup trailer 100 is connected to a rear end of the main machine of the shield machine. The backup trailer 100 includes a plurality of carriages, each carriage is referred to as a trolley. The backup trailer 100 of the shield machine is used to carry a supporting equipment such as a control system of the main machine of the shield machine.

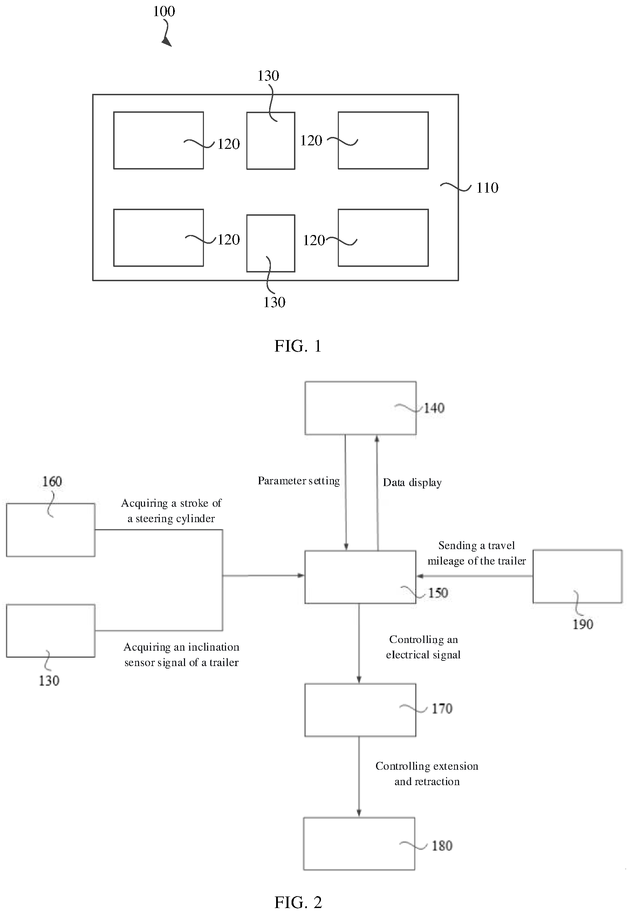

As shown in FIGS. 1 and 2, embodiments of the present disclosure provide a backup trailer 100. The backup trailer 100 may include a trailer 110 and a rubber-coated wheel traveling mechanism 120. The rubber-coated wheel traveling mechanism 120 is connected to a bottom of the trailer 110 and is used to bear the total weight of the trailer 110 and all equipment and advance forward within a laid tunnel. The connection method between the rubber-coated wheel traveling mechanisms 120 and the trailer 110 is not limited in this embodiment.

The backup trailer 100 may include a main controller 140 and a sub-controller 150, and the main controller 140 is electrically connected to the sub-controller 150. For example, the main controller 140 and the sub-controller 150 may be electrically connected by wire, or the main controller 140 and the sub-controller 150 may be electrically connected wirelessly, which is not limited in this embodiment.

In some embodiments, the main controller 140 in the present disclosure may be a host computer, and the host computer is a computer that may directly issue a control command. In some embodiments, the sub-controller 150 in the present disclosure may be a programmable logic controller (PLC), which is not limited in this embodiment.

The main controller 140 is used to determine an actual deviation value of the trailer 110 during traveling and sets a target correction value of the trailer 110, the main controller 140 is also used to send the actual deviation value and the target correction value to the sub-controller 150, and the target correction value is less than the actual deviation value.

It should be noted that the deviation value is a deviation angle between an actual traveling path and a preset traveling path of the trailer 110, in degrees. The actual deviation value of the trailer 110 is a value determined by an on-site operator. The on-site operator records the actual deviation value of the trailer 110 in the main controller 140. The target correction value of the trailer 110 is a target value to be reached after correcting the trailer 110 when the trailer 110 deviates, and is a value set by the main controller 140 according to actual conditions.

For example, the actual deviation value of the trailer 110 may be denoted as T1, and the target correction value of the trailer 110 may be denoted as T2.

For example, assuming that the actual deviation value of the trailer 110 is 2° and the target correction value of the trailer 110 is 0.5°, during traveling of the trailer 110, when the deviation angle between the actual traveling path and the preset traveling path of the trailer 110 is any value less than 0.5°, it indicates that the trailer 110 has not deviated and has a good traveling state. Conversely, when the deviation angle between the actual traveling path and the preset traveling path of the trailer 110 is any value greater than 2°, it indicates that the trailer 110 has deviated, and at this time, the trailer 110 needs to be corrected.

In a possible implementation, as shown in FIG. 1, the trailer 110 may be provided with an inclination sensor 130, and the inclination sensor 130 is electrically connected to the sub-controller 150. The inclination sensor 130 is used to acquire an inclination sensor 130 signal of the trailer 110 when the trailer 110 is inclined. The sub-controller 150 is used to acquire the inclination sensor 130 signal and process the inclination sensor 130 signal to obtain an inclination angle value of the trailer 110. The sub-controller 150 is further used to calculate a deviation amount of the rubber-coated wheel 120 based on the inclination angle value of the trailer 110.

The inclination sensor 130, also referred to as an inclinometer, a clinometer, a level, or a tiltmeter, is a sensor for measuring and detecting an inclination angle of an object. It may accurately measure the inclination angle of the object and feed a measurement result back to the sub-controller 150. The working principle of the inclination sensor 130 is achieved by detecting the inclination angle of the object.

The sub-controller 150 acquires the inclination sensor 130 signal and processes the inclination sensor 130 signal to obtain the inclination angle value of the trailer 110. Specifically, the inclination sensor 130 signal includes a plurality of consecutive signal values. The sub-controller 150 may obtain a plurality of consecutive inclination angle values after performing analog-to-digital conversion and filtering processing on the consecutive inclination sensor 130 signals. The working principle of the analog-to-digital conversion is to divide an analog signal into a series of discrete samples and convert each sample value into a corresponding digital representation. The working principle of the filtering processing is to remove or attenuate unnecessary frequency components through a filter, thereby obtaining a desired signal.

It should be noted that since the inclination angle values obtained after processing a plurality of inclination sensor 130 signals are also a plurality of consecutive values, in order to improve data accuracy, an average value of the plurality of consecutive inclination angle values is calculated, and finally the inclination angle value of the trailer 110 during traveling is obtained.

The sub-controller 150 is further used to calculate a deviation amount of the rubber-coated wheel 1231 according to the inclination angle value of the trailer 110. Specifically, the calculation may be performed based on a trigonometric function relationship. For example, the deviation amount of the rubber-coated wheel 1231 is calculated by a formula: $L = 2 \times R \times sin \frac{θ}{2}$, where L is the deviation amount of the rubber-coated wheel 1231, θ is the average value of the plurality of inclination angle values, and R is an inner diameter of one full ring of segments formed by segment erection. The inner diameter of the full ring of segments may be set by the main controller 140 according to instructions from the on-site operator and is a known parameter.

In a possible implementation, the rubber-coated wheel traveling mechanism 120 includes a rubber-coated wheel pair 123, and the rubber-coated wheel pair 123 includes two rubber-coated wheels 1231. A steering cylinder 180 may be connected between the rubber-coated wheel 1231 and the trailer 110, and the steering cylinder 180 is used to perform a steering operation on the rubber-coated wheel 1231. The sub-controller 150 is used to acquire a stroke of the steering cylinder 180, and the sub-controller 150 is further used to control extension and retraction of the steering cylinder 180, so that an extension/retraction amount of the steering cylinder 180 equals the deviation amount of the rubber-coated wheel 1231, thereby achieving steering of the rubber-coated wheel 1231.

It should be noted that the purpose of setting the extension/retraction amount of the steering cylinder 180 equal to the deviation amount of the rubber-coated wheel 1231 is as follows: assuming that the deviation amount of the rubber-coated wheel 1231 calculated based on the trigonometric function relationship is 5°, the steering cylinder 180 needs to extend or retract by a length corresponding to the deviation amount of 5°, so as to achieve correction of the rubber-coated wheel 1231, thereby ensuring that the rubber-coated wheel 1231 travels along the preset path.

For example, when a leftward deviation amount of the rubber-coated wheel 1231 is 5°, the steering cylinder 180 may extend by a length corresponding to the deviation amount of 5°, and when a rightward deviation amount of the rubber-coated wheel 1231 is 5°, the steering cylinder 180 may retract by a length corresponding to the deviation amount of 5°. Alternatively, the configuration may be reversed. For example, when the leftward deviation amount of the rubber-coated wheel 1231 is 5°, the steering cylinder 180 may retract by the length corresponding to the deviation amount of 5°, and when the rightward deviation amount of the rubber-coated wheel 1231 is 5°, the steering cylinder 180 may extend by the length corresponding to the deviation amount of 5°, which is not be limited in this embodiment.

In a possible implementation, the steering cylinder 180 may be provided with a stroke sensor 160, and the stroke sensor 160 is electrically connected to the sub-controller 150. The sub-controller 150 is configured to acquire the stroke of the steering cylinder 180 through the stroke sensor 160.

For example, the stroke sensor 160 in this embodiment may be a draw-wire sensor. The draw-wire sensor measures a linear displacement or angular changes of an object, and it achieves measurement through a wire and a pulley and achieves displacement measurement according to a length of the wire. Specifically, when the object moves, the wire may stretch or contract to change the length of the wire. A device on the pulley may detect a change in the wire and transmit a signal to a measurement circuit inside the sensor, and finally output a measurement result through an output interface.

For example, the stroke sensor 160 may be disposed inside the steering cylinder 180, or the stroke sensor 160 may be disposed on the steering cylinder 180 and installed in parallel to the steering cylinder 180, which is not limited in this embodiment.

The steering cylinder 180 may be provided with an electro-hydraulic proportional valve 170, and the electro-hydraulic proportional valve 170 is electrically connected to the sub-controller 150. The sub-controller 150 controls the extension and retraction of the steering cylinder 180 through the electro-hydraulic proportional valve 170. Specifically, the sub-controller 150 issues a result obtained by calculation as an instruction to the electro-hydraulic proportional valve 170, and then electro-hydraulic proportional valve 170 drives the extension and retraction of the steering cylinder 180.

The electro-hydraulic proportional valve 170 is a device that controls movement of the steering cylinder 180 through an electrical signal. When the electro-hydraulic proportional valve 170 is energized, it converts the electrical signal into a hydraulic signal, regulates a flow rate and pressure of hydraulic oil by controlling a hydraulic valve of the steering cylinder 180, thereby achieving the purpose of precise control over the operation of the steering cylinder 180.

In a possible implementation, as shown in FIG. 2, the backup trailer 100 may further include a guide device 190. The guide device 190 is electrically connected to the sub-controller 150. The guide device 190 acquires a travel mileage of the trailer 110, and sends the travel mileage of the trailer 110 to the sub-controller 150. For example, the guide device 190 in this embodiment may be a total station, a laser tracker, or a positioning device.

The backup trailer 100 may further include a touch control device. The touch control device is electrically connected to the main controller 140. The main controller 140 acquires an operation instruction from the on-site operator through the touch control device and sends the operation instruction to the sub-controller 150. For example, the touch control device in this embodiment may be a touch screen.

For example, the main controller 140 may acquire the operation instruction from the on-site operator, such as entering or exiting an automatic steering program and setting parameters, and issue the acquired operation instruction to the sub-controller 150. The sub-controller 150 performs calculation in combination with information issued by the main controller 140 and the guide device 190. The sub-controller 150 issues the result obtained by calculation as an instruction to the electro-hydraulic proportional valve 170, thereby driving the steering cylinder 180 to execute. The data acquired by the sub-controller 150 and the result obtained by calculation are sent to the main controller 140, and displayed on the touch screen by the main controller 140 for viewing by the on-site operator.

In a possible implementation, a plurality of rubber-coated wheels 1231 may be provided and are connected at different positions on the bottom of the trailer 110. For example, the number of the rubber-coated wheels 1231 may be two, three, four, or more. This embodiment is mainly described by taking four rubber-coated wheels 1231 as an example, where two rubber-coated wheels 1231 are connected at a front end of the trailer 110, and the other two rubber-coated wheels 1231 are connected at a rear end of the trailer 110. A plurality of inclination sensors 130 may be provided and are disposed at least at the front end and the rear end of the trailer 110. For example, the number of the inclination sensors 130 may be two, three, four, or more. This embodiment is mainly described by taking two inclination sensors 130 as an example, and the two inclination sensors 130 are respectively disposed at the front end and the rear end of the trailer 110.

A plurality of steering cylinders 180 may be provided and are connected in one-to-one correspondence between the plurality of rubber-coated wheels 1231 and the trailer 110. For example, the number of the steering cylinders 180 may be two, three, four, or more. This embodiment is mainly described by taking four steering cylinders 180 as an example. A plurality of stroke sensors 160 may be provided and are disposed in one-to-one correspondence on the plurality of steering cylinders 180. For example, the number of stroke sensors 160 may be two, three, four, or more. This embodiment is mainly described using four stroke sensors 160 as an example.

In this way, deviation correction may be performed on the trailer 110 from different positions of the trailer 110, which maximizes deviation correction accuracy of the trailer 110, thereby avoiding a problem of deviation of the backup trailer 100 and further ensuring that the backup trailer 100 travels along the preset path.

### Embodiment 2

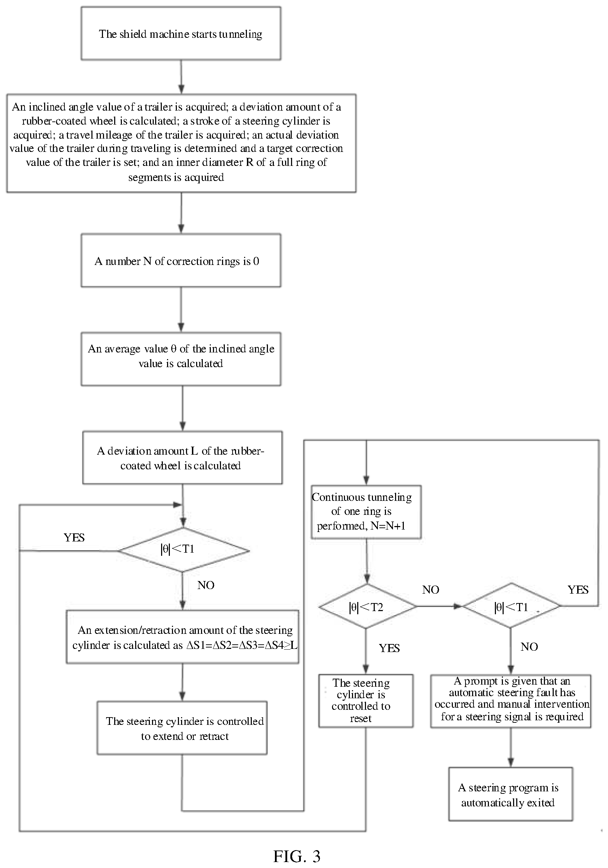

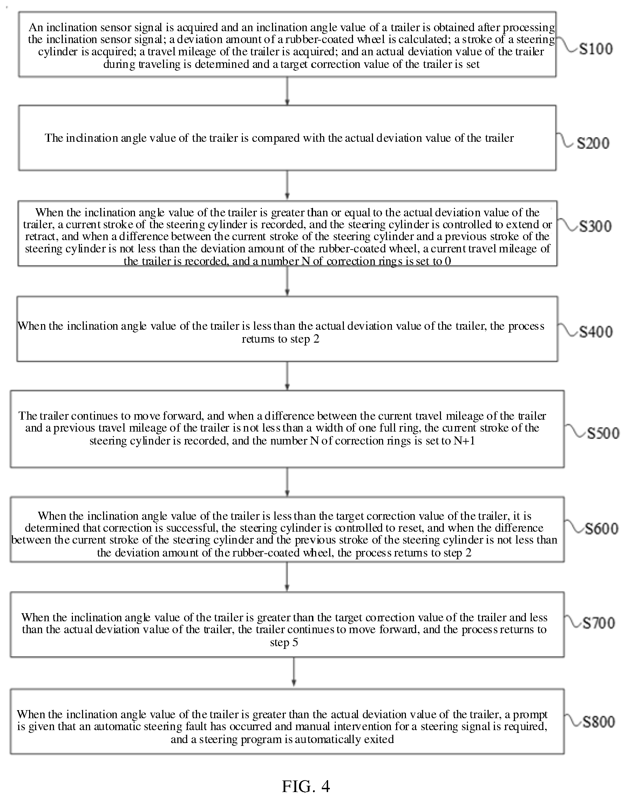

As shown in FIGS. 3 and 4, embodiments of the present disclosure further provide a method of steering a backup trailer 100, for use in the backup trailer 100. The method of steering the backup trailer 100 may include steps S100 to S800.

In S100, an inclination sensor signal is acquired and the inclination sensor signal is processed to obtain an inclination angle value of a trailer; a deviation amount of a rubber-coated wheel is calculated; a stroke of a steering cylinder is acquired; a travel mileage of the trailer is acquired; and an actual deviation value of the trailer during traveling is determined and a target correction value of the trailer is set.

In some embodiments, taking two inclination sensors 130 as an example, the two inclination sensors 130 are respectively disposed at the front end and the rear end of the trailer 110. The sub-controller 150 acquires two inclination sensor 130 signals, and performs analog-to-digital conversion and filtering processing on the inclination sensor 130 signals at both the front and rear ends to obtain the inclination angle value of the trailer 110. In order to improve data accuracy, an average value of the inclination angle values is calculated, and finally the inclination angle value of the trailer 110 during traveling is obtained.

It should be noted that the inclination angle value of the trailer 110 during traveling is an absolute value.

In some embodiments, taking four rubber-coated wheels 1231 and four steering cylinders 180 as an example, the sub-controller acquires strokes of the four steering cylinders 180 in real time, marked as S1, S2, S3, and S4 respectively. The sub-controller acquires a travel mileage D1 of the trailer 110, and the deviation amount of the rubber-coated wheels 1231 is calculated as L based on the trigonometric function relationship.

In some embodiments, the main controller 140 sets an inner diameter R of one full ring of segments and a width W of one full ring of segments. The main controller 140 determines the actual deviation value of the trailer 110 during traveling and sets the target correction value of the trailer 110, and sends the above-mentioned values to the sub-controller 150. Here, the segment inner diameter R is the inner diameter of one full ring of segments formed by segment erection, and W is the width of one full ring of segments formed by segment erection.

In some embodiments, the actual deviation value of the trailer 110 is a value determined by the on-site operator. The on-site operator records the actual deviation value of the trailer 110 in the main controller 140. The target correction value of the trailer 110 is a target value to be reached after correcting the trailer 110 when the trailer 110 deviates, and is a value set by the main controller 140 according to actual conditions.

In S200, the inclination angle value of the trailer is compared with the actual deviation value of the trailer. For example, assuming that the actual deviation value of the trailer 110 is 2°, and the inclination angle value of the trailer 110 is a deviation value measured by the inclination sensor 130 during traveling and calculated by the sub-controller, and when the inclination angle value of the trailer 110 is greater than 2°, it indicates that the trailer 110 has deviated, and at this time, the trailer 110 needs to be corrected.

In S300, when the inclination angle value of the trailer is greater than or equal to the actual deviation value of the trailer, a current stroke of the steering cylinder is recorded, and the steering cylinder is controlled to extend or retract, and when a difference between the current stroke of the steering cylinder and a previous stroke of the steering cylinder is not less than the deviation amount of the rubber-coated wheel, a current travel mileage of the trailer is recorded, and a number N of correction rings is set to 0.

When the inclination angle value of the trailer 110 is greater than or equal to the actual deviation value of the trailer 110, it means that the trailer 110 is in a deviated state. At this time, the sub-controller 150 records current strokes of the steering cylinders 180, marked as S11, S21, S31, and S41 respectively. The sub-controller 150 issues a command to extend or retract the four steering cylinders 180 by the deviation amount L of the rubber-coated wheel 1231. When |S11-S1| >= L, |S21-S2| >= L, |S31-S3| >= L and |S41-S4| >= L, the sub-controller 150 records a current travel mileage of the trailer 110, marked as D11, and sets the number N of correction rings to 0.

For example, |S11-S1| >= L, |S21-S2| >= L, |S31-S3| >= L and |S41-S4| >= L mean: ΔS1 = ΔS2 = ΔS3 = ΔS4 >= L.

It should be noted that S11, S21, S31, and S41 are previous strokes of the steering cylinders 180, and S1, S2, S3, and S4 are real-time strokes of the steering cylinders 180. The purpose of setting |S11-S1| >= L, |S21-S2| >= L, |S31-S3| >= L and |S41-S4| >= L is as follows: differences between the previous strokes and the real-time strokes of the four steering cylinders 180 are not less than the deviation amount of the rubber-coated wheel 1231, which may facilitate complete correction of the rubber-coated wheel 1231, thereby ensuring that the four rubber-coated wheels 1231 travel along a preset trajectory.

It should be noted that since the shield machine advances while erecting segments, or advances after erecting a full ring of segments, the erected segments constitute one full ring, referred to as one ring. When the number N of correction rings is 1, it means that the trailer 110 has traveled one ring; when the number N of correction rings is 2, it means that the trailer 110 has traveled two rings.

In S400, when the inclination angle value of the trailer is less than the actual deviation value of the trailer, the process returns to step 2. For example, assuming that the actual deviation value of the trailer 110 is 2° and the inclination angle value of the trailer 110 is 1.5°, since the trailer 110 continues to move forward, it is necessary to return to step 2, thereby continuing to compare the inclination angle value of the trailer 110 with the actual deviation value of the trailer 110 during forward traveling, until the inclination angle value of the trailer 110 is less than or equal to the target correction value of the trailer 110, indicating successful correction.

In S500, the trailer continues to move forward, and when a difference between the current travel mileage of the trailer and a previous travel mileage of the trailer is not less than a width of one full ring of segments formed by segment erection, the current stroke of the steering cylinder is recorded, and the number N of correction rings is set to N+1.

For example, the width of N full rings of segments formed by segment erection is calculated by a formula: S=N×W, where N is a number of correction rings and W is the width of one full ring of segments. For example, the travel mileage when the trailer 110 moves forward by one ring is 1 × W, the travel mileage when the trailer 110 moves forward by two rings is 2 × W, and the travel mileage when the trailer 110 moves forward by N rings is N × W.

For example, in step 1, a real-time travel mileage of the trailer 110 is marked as D1. In step 3, an initial travel mileage of the trailer 110 is marked as D11. When |D1 - D11| >= 1 × W, the sub-controller 150 records the current strokes of the steering cylinders 180, marked as S12, S22, S32, and S42 respectively, records the current travel mileage of the trailer 110, marked as D12, and calculates the current number N of correction rings as 1, then the process enters a comparison procedure to compare the inclination angle value of the trailer 110 with the target correction value of the trailer 110.

It should be noted that the purpose of setting |D1 - D11| >= N × W is to ensure that the trailer 110 has moved forward by a number of full rings.

In S600, when the inclination angle value of the trailer is less than the target correction value of the trailer, it is determined that correction is successful, the steering cylinder is controlled to reset, and when the difference between the current stroke of the steering cylinder and the previous stroke of the steering cylinder is not less than the deviation amount of the rubber-coated wheel, the process returns to step 2.

For example, assuming that the target correction value of the trailer 110 is 0.5°, when the inclination angle value of the trailer 110 is less than 0.5°, such as 0.2°, it indicates that the trailer 110 has been successfully corrected. At this time, the sub-controller 150 controls the steering cylinder 180 to reset.

For example, the method of controlling the steering cylinder 180 to reset is as follows: the sub-controller 150 issues a command to extend or retract each steering cylinder 180 by L, so as to reset the steering cylinder 180. When |S12 - S1| >= L, |S22 - S2| >= L, |S32 - S3| >= L and |S42 - S4| >= L, the process continues to return to step 2.

It should be noted that the purpose of setting |S12 - S1| >= L, |S22 - S2| >= L, |S32 - S3| >= L and |S42 - S4| >= L is as follows: differences between current strokes and previous strokes of the four steering cylinders 180 are not less than the deviation amount of the rubber-coated wheel 1231, which may facilitate complete correction of the rubber-coated wheel 1231, thereby ensuring that the four rubber-coated wheels 1231 travel along the preset trajectory.

It should be noted that the reason for returning to step 2 after successful correction is as follows: since the trailer 110 continues to move forward, each time the trailer 110 moves forward by one ring, it is necessary to continuously compare the inclination angle value of the trailer 110 with the actual deviation value of the trailer 110, so as to ensure that the trailer 110 remains in a successfully corrected state during traveling.

In S700, when the inclination angle value of the trailer is greater than the target correction value of the trailer and less than the actual deviation value of the trailer, the trailer continues to move forward, and the process returns to step 5.

For example, assuming that the target correction value of the trailer 110 is 0.5°, the actual deviation value of the trailer 110 is 2°, and the inclination angle value of the trailer 110 is 1.5°, at this time, the trailer continues to move forward, and the process returns to step 5. Through step 5, the inclination angle value of the trailer 110 is continuously compared with the actual deviation value of the trailer 110, until the inclination angle value of the trailer 110 is less than the target correction value of the trailer 110, indicating successful correction.

In S800, when the inclination angle value of the trailer is greater than the actual deviation value of the trailer, a prompt is given that an automatic steering fault has occurred and manual intervention for a steering signal is required, and a steering program is automatically exited.

For example, assuming that the actual deviation value of the trailer 110 is 2° and the inclination angle value of the trailer 110 is 4°, it indicates that the trailer 110 is in a deviated state. At this time, the sub-controller 150 prompts that an automatic steering fault has occurred and manual intervention for a steering signal is required, and the steering program is automatically exited.

For example, in the above-mentioned step, the number N of correction rings is 0. In addition, the sub-controller 150 may transmit alarm information to the main controller 140 and display it on the touch screen, so as to prompt the steering fault to the on-site operator, and the on-site operator may manually intervene in a steering signal of the backup trailer 100.

Embodiments of the present disclosure provide a backup trailer, a method of steering a backup trailer, and a shield machine. The backup trailer includes a trailer, a rubber-coated wheel, a main controller and a sub-controller. The sub-controller is further configured to compare the inclination angle value of the trailer with the actual deviation value of the trailer, and adjust the inclination angle value of the trailer to be less than or equal to the target correction value. In this way, the backup trailer may be corrected in real time, thereby avoiding the problem of deviation of the backup trailer, and ensuring that the backup trailer travels along a preset path. At the same time, the device of the present disclosure is applicable to direction adjustment of backup trailers in different types of tunnels.

### Embodiment 3

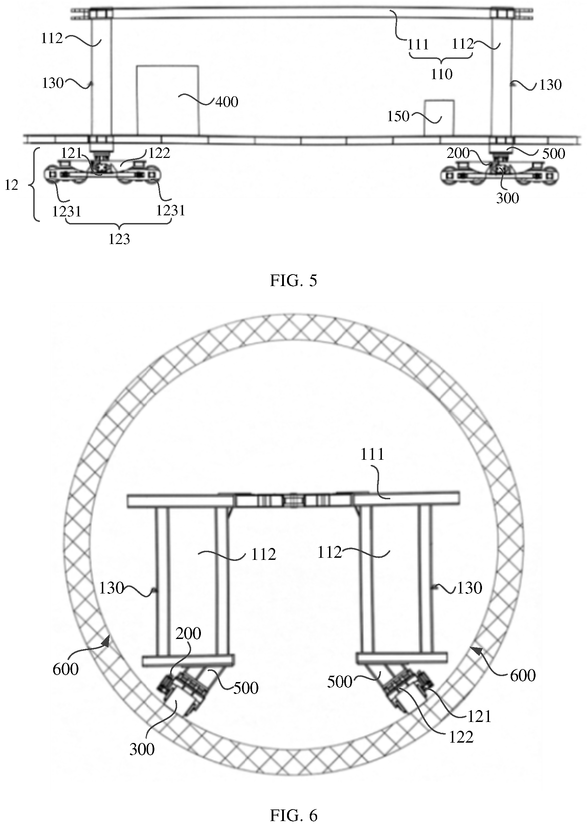

In a possible implementation, as shown in FIGS. 5 and 6, the rubber-coated wheel traveling mechanism 120 may be provided with a reset cylinder 300 and a displacement sensor 200, and the sub-controller 150 is electrically connected to the reset cylinder 300 and the displacement sensor 200.

For example, the sub-controller 150 may be electrically connected to the reset cylinder 300 and the displacement sensor 200 by wire, or the sub-controller 150 may be electrically connected to the reset cylinder 300 and the displacement sensor 200 wirelessly, which is not further limited in embodiments of the present disclosure.

The connection method between the reset cylinder 300 and the rubber-coated wheel traveling mechanism 120, the connection method between the displacement sensor 200 and the rubber-coated wheel traveling mechanism 120, and the connection method between the reset cylinder 300 and the displacement sensor 200 are also not further limited, and may be specifically set according to actual needs.

The displacement sensor 200 may measure a linear displacement or angular changes of an object, and it achieves measurement through a wire and a pulley and achieves displacement measurement according to a length of the wire. Specifically, when the object moves, the wire may stretch or contract to change the length of the wire. A device on the pulley may detect a change in the wire and transmit a signal to a measurement circuit inside the sensor, and finally output a measurement result through an output interface.

For example, the displacement sensor 200 in embodiments of the present disclosure may be a draw-wire sensor.

The automatic steering process of the backup trailer 100 provided in embodiments of the present disclosure is as follows:

When the backup trailer 100 tilts to one side, the inclination sensor 130 first detects an inclination angle value between a real-time motion trajectory of the trailer 110 and a horizontal direction, and sends the inclination angle value to the sub-controller 150. Since the tilting movement of the trailer 110 may drive the rubber-coated wheel traveling mechanism 120 to rotate, the displacement sensor 200 detects a real-time rotational displacement value of the rubber-coated wheel traveling mechanism 120 and sends the real-time rotational displacement value to the sub-controller 150.

The sub-controller 150 receives the inclination angle value and the real-time rotational displacement value. The sub-controller 150 is provided with a control unit. The control unit processes the inclination angle value and the real-time rotational displacement value and sends a steering signal to the reset cylinder 300. The reset cylinder 300 receives the steering signal and performs a steering operation on the rubber-coated wheel traveling mechanism 120. Specifically, the steering operation on the rubber-coated wheel traveling mechanism 120 may be performed by controlling extension or retraction of a piston rod of the reset cylinder 300. The rubber-coated wheel traveling mechanism 120 rotates according to the steering operation and reversely drives the trailer 110 to move, thereby quickly achieving attitude correction of the trailer 110.

The inclination sensor 130 continues to detect the inclination angle value between the real-time motion trajectory of the trailer 110 and the horizontal direction. When the inclination angle value is greater than the actual deviation value, the above-mentioned steps are repeated. When the inclination angle value is less than or equal to the target correction value, the sub-controller 150 is configured to send a reset signal to the reset cylinder 300.

It should be noted that a preset inclination angle value is not further limited in embodiments of the present disclosure, and may be specifically set according to actual working conditions. For example, the preset inclination angle value in embodiments of the present disclosure may be 0.5°.

It should be noted that when the reset cylinder 300 is not completely reset, the displacement sensor 200 continues to send the real-time rotational displacement value of the rubber-coated wheel traveling mechanism 120 to the sub-controller 150. The sub-controller 150 receives the real-time rotational displacement value and continues to send the reset signal to the reset cylinder 300 until the reset cylinder 300 is completely reset.

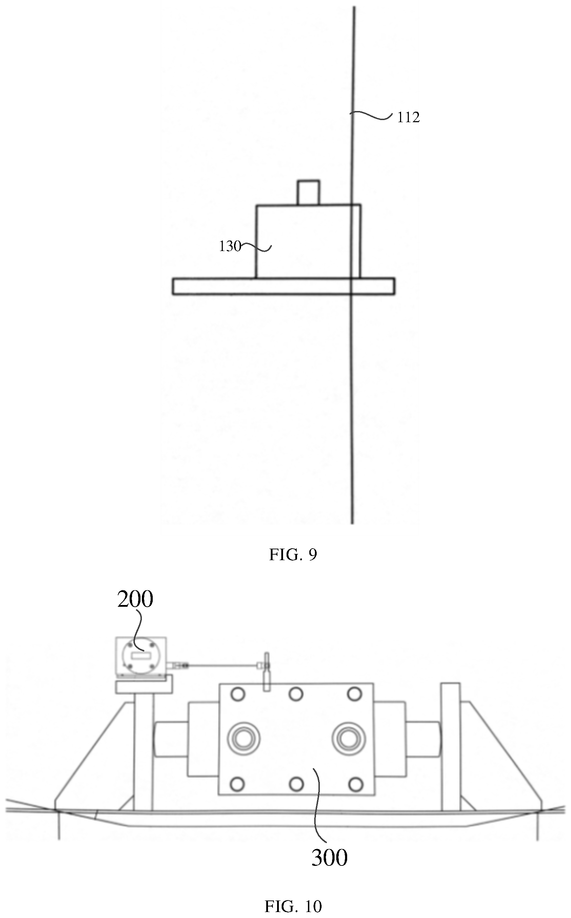

In addition, as shown in FIG. 10, since the displacement sensor 200 is connected to the reset cylinder 300, and the reset cylinder 300 extends or retracts after receiving the steering signal from the sub-controller 150, the displacement sensor 200 may also determine whether an extension/retraction direction of the reset cylinder 300 is correct.

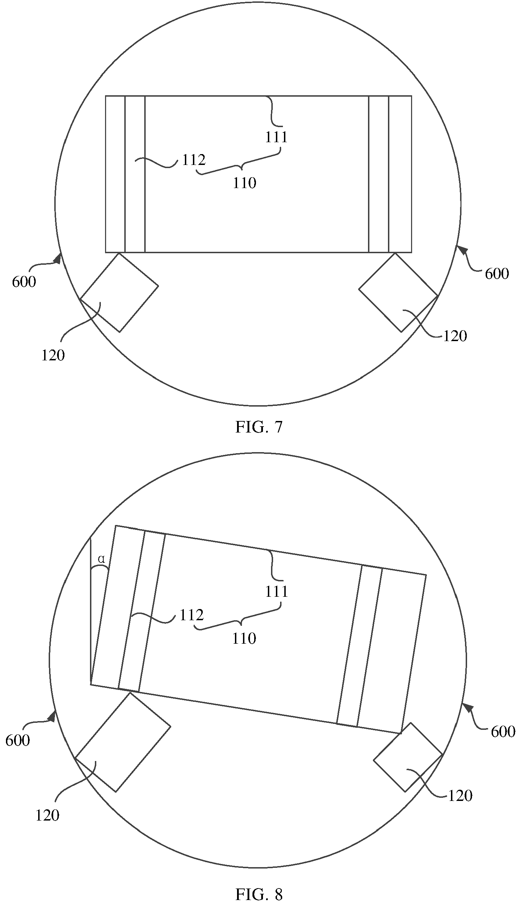

For example, a schematic structural diagram of the backup trailer in a non-inclined state may be referred to FIG. 7, and a schematic structural diagram of the backup trailer in an inclined state may be referred to FIG. 8. The inclination angle of the backup trailer 100 may be indicated by α in FIG. 8.

Therefore, the backup trailer 100 provided in embodiments of the present disclosure includes a trailer 110, a rubber-coated wheel traveling mechanism 120, and a sub-controller 150. The trailer 110 is provided with an inclination sensor 130, and the rubber-coated wheel traveling mechanism 120 is provided with a reset cylinder 300 and a displacement sensor 200. The present disclosure may achieve automatic steering of the rubber-coated wheel to the greatest extent in a closed-loop automatic adjustment manner, thereby ensuring stable operation of the backup trailer 100. At the same time, the device of the present disclosure is applicable to direction adjustment of backup trailers 100 in different types of tunnels.

It may be understood that the "closed-loop" in the closed-loop automatic adjustment manner means that: the direction adjustment process of the backup trailer 100 in the present disclosure may be smoothly connected, thereby forming a complete closed system.

In addition, the device of the present disclosure being applicable to direction adjustment of backup trailers 100 in different types of tunnels specifically means that: since the interior of a tunnel includes but is not limited to a straight tunnel or a curved tunnel, the device of the present disclosure is applicable to direction adjustment of the backup trailer 100 in the straight tunnel and is also applicable to direction adjustment of the backup trailer 100 in the curved tunnel. Alternatively, the device of the present disclosure may be set according to actual working conditions, and has a wide range of applications.

In a possible implementation, as shown in FIG. 5, the backup trailer 100 may further include a hydraulic pump station 400. The hydraulic pump station 400 is disposed on the trailer 110, and the hydraulic pump station 400 is connected to the reset cylinder 300. The hydraulic pump station 400 may provide power to the reset cylinder 300, thereby ensuring the normal operation of the reset cylinder 300.

In a possible implementation, as shown in FIGS. 5 and 6, the trailer 110 may include a trailer frame 111 and a column 112 disposed on the trailer frame 111. In embodiments of the present disclosure, the inclination sensor 130 may be disposed on the column 112.

The shapes, materials, sizes, etc. of the trailer frame 111 and the column 112 are not further limited. For example, in embodiments of the present disclosure, the trailer frame 111 may be a quadrilateral frame structure. The trailer frame 111 includes four sides connected end to end in sequence, where the columns 112 are two vertical sides thereof. The inclination sensor 130 is disposed on the column 112, which may avoid a problem of assembly interference with other electrical devices arranged on the trailer frame 111.

Specifically, in embodiments of the present disclosure, as shown in FIGS. 5 and 6, two columns 112 may be provided and are oppositely disposed on the trailer frame 111. Two inclination sensors 130 may be provided and are correspondingly disposed on the two columns 112. Two rubber-coated wheel traveling mechanisms 120 may be provided and are correspondingly disposed below the trailer frame 111. The two rubber-coated wheel traveling mechanisms 120 each travel along an inner wall surface 600 of erected segments.

In a possible implementation, as shown in FIGS. 5 and 6, the rubber-coated wheel traveling mechanism 120 may include a connecting rod 121, a box body 122, and a rubber-coated wheel pair 123, and the rubber-coated wheel pair 123 includes two rubber-coated wheels 1231.

Specifically, the box body 122 is connected below the trailer frame 111, the rubber-coated wheel pair 123 is disposed on a side of the box body 122 away from the trailer frame 111, and the connecting rod 121 is connected between the two rubber-coated wheels 1231. When the trailer 110 is inclined, it drives the rubber-coated wheel 1231 to rotate.

The shapes, materials, sizes, etc. of the connecting rod 121 and the box body 122 are not further limited, and may be set according to actual needs. In addition, the connection method between the box body 122 and the rubber-coated wheels 1231 is also not limited.

It should be additionally noted that each rubber-coated wheel 1231 is provided with a small box body thereon, and the connecting rod 121 is connected between the two small box bodies, thereby connecting the two rubber-coated wheels 1231 and improving connection stability between the two rubber-coated wheels 1231.

In order to further improve the connection stability between the trailer 110 and the rubber-coated wheel traveling mechanism 120, in embodiments of the present disclosure, as shown in FIGS. 5 and 6, a connecting base 500 may be further provided between the trailer 110 and the rubber-coated wheel traveling mechanism 120, and the trailer 110 and the rubber-coated wheel traveling mechanism 120 are connected through the connecting base 500. Specifically, the trailer frame 111 and the box body 122 are connected through the connecting base 500.

The shape, material, quantity, etc. of the connecting base 500 are not further limited, and may be set according to actual needs. In addition, the connection methods between the connecting base 500 and the trailer frame 111, and between the connecting base 500 and the box body 122 are also not limited. For example, the connecting base 500 and the trailer frame 111, and the connecting base 500 and the box body 122 may be connected by clamping, bonding, welding, threaded connection, etc.

### Embodiment 4

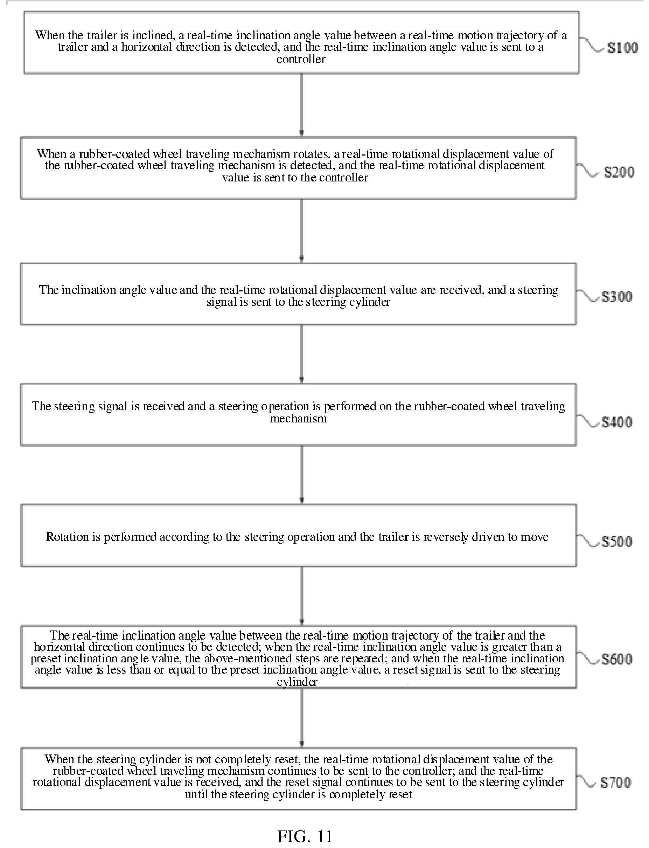

As shown in FIG. 11, embodiments of the present disclosure further provide a method of steering a backup trailer 100, for use in the backup trailer 100. The method of steering the backup trailer 100 may include steps S100 to S700.

In S100, when the trailer is inclined, an inclination angle value between a real-time motion trajectory of a trailer and a horizontal direction is detected, and the inclination angle value is sent to a sub-controller.

Specifically, in embodiments of the present disclosure, the inclination angle value between the real-time motion trajectory of the trailer 110 and the horizontal direction is detected mainly by the inclination sensor 130.

In S200, when a rubber-coated wheel traveling mechanism rotates, a real-time rotational displacement value of the rubber-coated wheel traveling mechanism is detected, and the real-time rotational displacement value is sent to the sub-controller. Specifically, in embodiments of the present disclosure, the real-time rotational displacement value of the rubber-coated wheel traveling mechanism 120 is detected mainly by the displacement sensor 200.

In S300, the inclination angle value and the real-time rotational displacement value are received, and a steering signal is sent to the reset cylinder. Specifically, in embodiments of the present disclosure, the sub-controller 150 receives the inclination angle value and the real-time rotational displacement value, and the sub-controller 150 sends the steering signal to the reset cylinder 300.

In S400, the steering signal is received and a steering operation is performed on the rubber-coated wheel traveling mechanism. Specifically, in embodiments of the present disclosure, the reset cylinder 300 receives the steering signal and performs the steering operation on the rubber-coated wheel traveling mechanism 120. For example, the steering signal may control the piston rod of the reset cylinder 300 to extend, or control the piston rod of the reset cylinder 300 to retract.

In S500, rotation is performed according to the steering operation and the trailer is reversely driven to move. Specifically, in embodiments of the present disclosure, the rubber-coated wheel traveling mechanism 120 rotates according to the steering operation and reversely drives the trailer 110 to move.

In S600, the detection of the inclination angle value between the real-time motion trajectory of the trailer and the horizontal direction is continued; when the inclination angle value is greater than a preset inclination angle value, the above-mentioned steps are repeated; and when the inclination angle value is less than or equal to the preset inclination angle value, a reset signal is sent to the reset cylinder.

Specifically, in embodiments of the present disclosure, the inclination sensor 130 continues to detect the inclination angle value between the real-time motion trajectory of the trailer 110 and the horizontal direction. When the inclination angle value is less than or equal to the preset inclination angle value, the sub-controller 150 sends a reset signal to the reset cylinder 300.

It may be understood that the reset signal and the steering signal may be opposite signals. For example, when the steering signal is an extension signal of the piston rod, the reset signal may be a retraction signal of the piston rod; or when the steering signal is a retraction signal of the piston rod, the reset signal may be an extension signal of the piston rod.

In S700, the sending a reset signal to the reset cylinder may specifically include: when the reset cylinder is not completely reset, continuing to send the real-time rotational displacement value of the rubber-coated wheel traveling mechanism to the sub-controller; and receiving the real-time rotational displacement value, and continuing to send the reset signal to the reset cylinder until the reset cylinder is completely reset.

Specifically, in embodiments of the present disclosure, when the reset cylinder 300 is not completely reset, the displacement sensor 200 continues to send the real-time rotational displacement value of the rubber-coated wheel traveling mechanism 120 to the sub-controller 150. The sub-controller 150 receives the real-time rotational displacement value and continues to send the reset signal to the reset cylinder 300 until the reset cylinder 300 is completely reset.

Embodiments of the present disclosure provide a backup trailer, a method of steering a backup trailer, and a shield machine. The backup trailer includes a trailer, a rubber-coated wheel traveling mechanism, and a sub-controller. The trailer is provided with an inclination sensor, and the rubber-coated wheel traveling mechanism is provided with a reset cylinder and a displacement sensor. The present disclosure may achieve automatic steering of the rubber-coated wheel to the greatest extent in a closed-loop steering adjustment manner, thereby ensuring the stable operation of the backup trailer. At the same time, the device of the present disclosure is applicable to direction adjustment of backup trailers in different types of tunnels. It should be noted that, in embodiments of the present disclosure, the direction adjustment of the backup trailer includes but is not limited to the above-mentioned two methods.

In the description of the present disclosure, it should be understood that terms such as "center", "longitudinal", "transverse", "length", "width", "thickness", "upper", "lower", "front", "rear", "left", "right", "vertical", "horizontal", "top", "bottom", "inner" and "outer" indicate orientations or positional relationships based on those shown in the accompanying drawings, which are only for convenience of describing the present disclosure and simplifying the description, rather than indicating or implying that the stated device or element must have a specific orientation or be constructed and operated in a specific orientation, and thus shall not be construed as limiting the present disclosure.

In the description of the present disclosure, it should be understood that terms "comprise", "include", "have" and any variations thereof are intended to cover non-exclusive inclusion. For example, a process, a method, a system, a product or an apparatus including a series of steps or units is not limited to those clearly listed steps or units, but may further include other steps or units not clearly listed or inherent to the process, method, product or apparatus.

Unless otherwise expressly specified and limited, terms "installation", "connection", "joining" and "fixing" shall be construed broadly. For example, the "connection" may be a fixed connection, a detachable connection or an integral connection; the "connection" may be a direct connection or an indirect connection via an intermediate medium; or the "connection" may be an internal connection or an interaction relationship between two elements. Those skilled in the art may understand the specific meanings of the above-mentioned terms in the present disclosure according to specific circumstances. In addition, terms "first", "second", etc. are only used for descriptive purposes, and shall not be construed as indicating or implying a relative importance or implicitly indicating the number of indicated technical features.

Finally, it should be noted that the above-mentioned embodiments are only used to illustrate the technical solutions of the present disclosure, rather than limiting the same. Although the present disclosure has been described in detail with reference to the foregoing embodiments, those skilled in the art should understand that they may still modify the technical solutions described in the foregoing embodiments, or perform equivalent substitutions on some or all of the technical features. Such modifications or substitutions shall not cause the corresponding technical solutions to depart from the scope of the technical solutions of embodiments of the present disclosure.

## Claims

1. A backup trailer, comprising a trailer, a rubber-coated wheel traveling mechanism, a main controller, and a sub-controller, wherein the rubber-coated wheel traveling mechanism is connected to a bottom of the trailer, the rubber-coated wheel traveling mechanism is driven to rotate when the trailer moves in an inclined manner, and the main controller is electrically connected to the sub-controller;
the main controller is configured to determine an actual deviation value of the trailer during traveling and set a target correction value of the trailer, the main controller is further configured to send the actual deviation value and the target correction value to the sub-controller, and the target correction value is less than the actual deviation value; and
the sub-controller is configured to acquire an inclination angle value of the trailer when the trailer is inclined, and the sub-controller is further configured to compare the inclination angle value of the trailer with the actual deviation value of the trailer, and adjust the inclination angle value of the trailer to be less than or equal to the target correction value.

2. The backup trailer according to claim 1, wherein the trailer is provided with an inclination sensor, and the sub-controller is electrically connected to the inclination sensor;
the inclination sensor is configured to acquire an inclination sensor signal of the trailer when the trailer is inclined, and the sub-controller is configured to acquire the inclination sensor signal and process the inclination sensor signal to obtain the inclination angle value of the trailer; and the sub-controller is further configured to calculate a deviation amount of a rubber-coated wheel according to the inclination angle value of the trailer.

3. The backup trailer according to claim 2, wherein the rubber-coated wheel traveling mechanism comprises a rubber-coated wheel pair, the rubber-coated wheel pair comprises two rubber-coated wheels, a steering cylinder is connected between the rubber-coated wheel and the trailer, and the steering cylinder is configured to perform a steering operation on the rubber-coated wheel; and
the sub-controller is configured to acquire a stroke of the steering cylinder, and the sub-controller is further configured to control extension and retraction of the steering cylinder, so that an extension/retraction amount of the steering cylinder equals the deviation amount of the rubber-coated wheel, thereby achieving steering of the rubber-coated wheel.

4. The backup trailer according to claim 3, wherein the steering cylinder is provided with a stroke sensor, the stroke sensor is electrically connected to the sub-controller, and the sub-controller is configured to acquire the stroke of the steering cylinder through the stroke sensor; and/or the steering cylinder is provided with an electro-hydraulic proportional valve, the electro-hydraulic proportional valve is electrically connected to the sub-controller, and the sub-controller is configured to control the extension and retraction of the steering cylinder through an electrical signal of the electro-hydraulic proportional valve.

5. The backup trailer according to claim 4, further comprising a guide device, wherein the guide device is electrically connected to the sub-controller, and the guide device is configured to acquire a travel mileage of the trailer and send the travel mileage of the trailer to the sub-controller; and/or the backup trailer further comprises a touch control device, the touch control device is electrically connected to the main controller, and the main controller is configured to acquire an operation instruction from an on-site operator through the touch control device and send the operation instruction to the sub-controller.

6. The backup trailer according to claim 5, wherein the rubber-coated wheel traveling mechanism is provided with a reset cylinder and a displacement sensor, the sub-controller is electrically connected to the steering cylinder and the displacement sensor, and the reset cylinder is connected to the displacement sensor;
the displacement sensor is configured to detect a real-time rotational displacement value of the rubber-coated wheel traveling mechanism when the rubber-coated wheel traveling mechanism rotates, and send the real-time rotational displacement value to the sub-controller;
the sub-controller is configured to receive the real-time rotational displacement value and send a steering signal to the reset cylinder, the reset cylinder is configured to receive the steering signal and perform a steering operation on the rubber-coated wheel traveling mechanism, the rubber-coated wheel traveling mechanism rotates according to the steering operation and reversely drives the trailer to move, and the inclination sensor is configured to continue to detect the inclination angle value of the trailer; and
when the inclination angle value of the trailer is greater than the actual deviation value of the trailer, the above steps are repeated, and when the inclination angle value of the trailer is less than or equal to the target correction value of the trailer, the sub-controller is configured to send a reset signal to the reset cylinder.

7. The backup trailer according to claim 6, wherein the displacement sensor is further configured to continue to send the real-time rotational displacement value of the rubber-coated wheel traveling mechanism to the sub-controller when the reset cylinder is not completely reset, and the sub-controller is configured to receive the real-time rotational displacement value and continue to send the reset signal to the reset cylinder until the reset cylinder is completely reset.

8. The backup trailer according to claim 7, further comprising a hydraulic pump station, wherein the hydraulic pump station is disposed on the trailer, the hydraulic pump station is connected to the reset cylinder, and the hydraulic pump station is configured to provide power to the reset cylinder.

9. The backup trailer according to any one of claims 3 to 8, wherein the trailer comprises a trailer frame and a column disposed on the trailer frame, the inclination sensor is disposed on the column, and the rubber-coated wheel traveling mechanism is connected below the trailer frame.

10. The backup trailer according to claim 9, wherein the rubber-coated wheel traveling mechanism comprises a connecting rod and a box body; the box body is connected below the trailer frame, the rubber-coated wheel pair is disposed on a side of the box body away from the trailer frame, and the connecting rod is connected between the two rubber-coated wheels; and the rubber-coated wheel is driven to rotate when the trailer is inclined.

11. The backup trailer according to claim 10, wherein two columns are provided and are oppositely disposed on the trailer frame, and two inclination sensors are provided and are correspondingly disposed on the two columns; and
two rubber-coated wheel traveling mechanisms are provided and are correspondingly disposed below the trailer frame.

12. The backup trailer according to any one of claims 1 to 8, further comprising a connecting base, wherein the trailer and the rubber-coated wheel traveling mechanism are connected through the connecting base.

13. The backup trailer according to any one of claims 4 to 8, wherein a plurality of rubber-coated wheels are provided and are connected to different positions on the bottom of the trailer; a plurality of inclination sensors are provided and are disposed at least at a front end and a rear end of the trailer; a plurality of steering cylinders are provided and are connected in one-to-one correspondence between the plurality of rubber-coated wheels and the trailer; and a plurality of stroke sensors are provided and are disposed in one-to-one correspondence on the plurality of steering cylinders.

14. A method of steering a backup trailer, for use in the backup trailer according to any one of claims 1 to 13, the method comprising:
acquiring an inclination sensor signal and processing the inclination sensor signal to obtain an inclination angle value of a trailer; calculating a deviation amount of a rubber-coated wheel; acquiring a stroke of a steering cylinder; acquiring a travel mileage of the trailer; determining an actual deviation value of the trailer during traveling and setting a target correction value of the trailer;
comparing the inclination angle value of the trailer with the actual deviation value of the trailer;
when the inclination angle value of the trailer is greater than or equal to the actual deviation value of the trailer, recording a current stroke of the steering cylinder, and controlling the steering cylinder to extend or retract, and when a difference between the current stroke of the steering cylinder and a previous stroke of the steering cylinder is not less than the deviation amount of the rubber-coated wheel, recording a current travel mileage of the trailer, and setting a number N of correction rings to 0;
when the inclination angle value of the trailer is less than the actual deviation value of the trailer, returning to the step of "comparing the inclination angle value of the trailer with the actual deviation value of the trailer";
continuing to move the trailer forward, and when a difference between the current travel mileage of the trailer and a previous travel mileage of the trailer is not less than a width of one full ring of segments formed by segment erection, recording the current stroke of the steering cylinder; and setting the number N of correction rings to N+1;
when the inclination angle value of the trailer is less than the target correction value of the trailer, determining that correction is successful, controlling the steering cylinder to reset, and when the difference between the current stroke of the steering cylinder and the previous stroke of the steering cylinder is not less than the deviation amount of the rubber-coated wheel, returning to the step of "comparing the inclination angle value of the trailer with the actual deviation value of the trailer";
when the inclination angle value of the trailer is greater than the target correction value of the trailer and less than the actual deviation value of the trailer, returning to the step of "continuing to move the trailer forward"; and
when the inclination angle value of the trailer is greater than the actual deviation value of the trailer, giving a prompt that an automatic steering fault has occurred and manual intervention for a steering signal is required, and automatically exiting a steering program.

15. The method of steering the backup trailer according to claim 14, wherein the step of "acquiring an inclination sensor signal and processing the inclination sensor signal to obtain an inclination angle value of a trailer" specifically comprises:
when the inclination sensor signal comprises a plurality of consecutive signal values, processing the plurality of inclination sensor signals to obtain a plurality of consecutive inclination angle values, and calculating an average value of the plurality of inclination angle values; and
the step of "calculating a deviation amount of a rubber-coated wheel" specifically comprises: setting an inner diameter of one full ring of segments formed by segment erection, and calculating the deviation amount of the rubber-coated wheel according to the inclination angle value of the trailer, wherein the deviation amount of the rubber-coated wheel is calculated by a formula: $L = 2 \times R \times sin \frac{θ}{2}$, wherein L is the deviation amount of the rubber-coated wheel, θ is the average value of the plurality of inclination angle values, and R is the inner diameter of one full ring of segments formed by segment erection.

16. The method of steering the backup trailer according to claim 15, wherein the step of "when a difference between the current travel mileage of the trailer and a previous travel mileage of the trailer is not less than a width of one full ring of segments formed by segment erection" specifically comprises:
setting the width of one full ring of segments, wherein the travel mileage of the trailer during a correction process is calculated by a formula: S=N×W, wherein S is the travel mileage of the trailer during the correction process, N is a number of correction rings, and W is the width of one full ring of segments.

17. A method of steering a backup trailer, for use in the backup trailer according to any one of claims 1 to 13, the method comprising:
acquiring an inclination angle value of a trailer and sending the inclination angle value to a sub-controller;
when a rubber-coated wheel traveling mechanism rotates, detecting a real-time rotational displacement value of the rubber-coated wheel traveling mechanism, and sending the real-time rotational displacement value to the sub-controller;
receiving the real-time rotational displacement value and sending a steering signal to a reset cylinder;
receiving the steering signal and performing a steering operation on the rubber-coated wheel traveling mechanism;
rotating according to the steering operation and reversely driving the trailer to move;
continuing to detect the inclination angle value of the trailer; and
when the inclination angle value is greater than an actual deviation value, repeating the above steps, and when the inclination angle value is less than or equal to a target correction value, sending a reset signal to the reset cylinder.

18. The method of steering the backup trailer according to claim 17, wherein the sending a reset signal to the reset cylinder specifically comprises:
when the reset cylinder is not completely reset, continuing to send the real-time rotational displacement value of the rubber-coated wheel traveling mechanism to the sub-controller; and
receiving the real-time rotational displacement value, and continuing to send the reset signal to the reset cylinder until the reset cylinder is completely reset.

19. A shield machine, comprising at least a cutter head, a shield body, and the backup trailer according to any one of claims 1 to 13, wherein the cutter head is connected to the shield body, the cutter head is located at a tunneling end of the shield machine, and the backup trailer is disposed at a rear end of the shield body.
